(19) Europäisches Patentamt
European Patent Office
Office européen des brevets

(11) **EP 1 739 807 A2**

(12) **EUROPÄISCHE PATENTANMELDUNG**

(43) Veröffentlichungstag:
**03.01.2007 Patentblatt 2007/01**

(51) Int Cl.:
*H02J 7/32* (2006.01)

(21) Anmeldenummer: **06010242.3**

(22) Anmeldetag: **18.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **29.06.2005 DE 102005030709**

(71) Anmelder: **Bosch Rexroth AG**
**70184 Stuttgart (DE)**

(72) Erfinder:
• **Kunkel, Steffen**
  **63768 Hösbach (DE)**
• **Herrmann, Karl-Günter**
  **97753 Karlstadt (DE)**
• **Hoerning, Michael**
  **97855 Triefenstein (DE)**
• **Kobelbauer, Berno**
  **97780 Gössenheim (DE)**

(54) **Stellantrieb und Notenergieversorgungseinrichtung**

(57)    Ein Stellantrieb für ein Rotorblatt einer Windkraftanlage ist mit einem elektrischen Motor und einem Frequenzumrichter versehen, der einen aus einem Stromnetz zu speisenden Gleichrichter, einen an den Gleichrichter angeschlossenen Zwischenkreis, und einen Wechselrichter zum Speisen des Motors aufweist, wobei der Zwischenkreis in einem netzgespeisten Normalbetrieb des Frequenzumrichters eine vorgegebene Nennbetriebsspannung führt. Des Weiteren ist eine an den Zwischenkreis angeschlossene Hilfsenergieversorgungseinrichtung vorgesehen. Die Hilfsenergieversorgungseinrichtung umfasst einen Energiespeicher, der eine Stützspannung zur Verfügung stellt, die weniger als 80% der Nennbetriebsspannung des Zwischenkreises beträgt. Eine Diode ist zwischen den Energiespeicher und den Zwischenkreis geschaltet und hinsichtlich ihrer Durchlassrichtung so angeordnet, dass sie einen Stützstrom aus dem Energiespeicher in den Zwischenkreis speist, falls die Zwischenkreisspannung unter die Stützspannung fällt. Die Diode verhindert einen Stromfluss zwischen dem Energiespeicher und dem Zwischenkreis, wenn die Zwischenkreisspannung größer als die Stützspannung ist. Eine Ladevorrichtung für den Energiespeicher weist eine geringere Ladespannung als die Nennbetriebsspannung des Zwischenkreises auf.

FIG.1

EP 1 739 807 A2

**Beschreibung**

Die Erfindung betrifft einen Stellantrieb für ein Rotorblatt einer Windkraftanlage gemäß dem Oberbegriff des Patentanspruchs 1. Des Weiteren betrifft die vorliegende Erfindung eine Notenergieversorgungseinrichtung für die Versorgung eines elektrischen Stellantriebs einer Windkraftanlage im Notbetrieb gemäß dem Oberbegriff des Patentanspruch 13.

Windkraftanlagen hoher Leistung sind fast ausnahmslos mit verstellbaren Rotorblättern ausgestattet. Dadurch lässt sich die Leistung der Windkraftanlage der Windgeschwindigkeit anpassen und bei hohen Windgeschwindigkeiten gegebenenfalls begrenzen. Bei Gefahr einer Überlastung durch starken Wind bzw. um die Anlage außer Betrieb zu nehmen, werden die Rotorblätter in eine so genannte Fahnenstellung gedreht, bei der kein antreibender Auftrieb am Rotorblatt entsteht. Zum Teil genügt es, ein Rotorblatt in die Fahnenstellung zu bringen, um die Windkraftanlage abzubremsen. Vorzugsweise werden alle Rotorblätter aus dem Wind gedreht.

Üblicherweise ist jedes Rotorblatt mit einem eigenen Verstellantrieb, einem so genannten Pitch-Antrieb versehen, der in der Rotornabe angeordnet ist. Für den Pitch-Antrieb wird meist ein elektrischer Antrieb verwendet. Bei einem Ausfall der Versorgungsspannung muss jedoch sichergestellt sein, dass die Rotorblätter weiterhin verstellbar sind und nötigenfalls in die Fahnenstellung gedreht werden können.

Ein herkömmlicher Pitch-Antrieb ist in der DE 103 35 575 A1 beschrieben. Der Antrieb umfasst einen Drehstrommotor und einen Frequenzumrichter zur Ansteuerung des Motors. Der Frequenzumrichter besteht aus einem Gleichrichter, der an ein Stromnetz angeschlossen ist, aus einem Zwischenkreis und aus einem gesteuerten Wechselrichter, der einen Drehstrom für den Motor erzeugt. An den Zwischenkreis ist eine Notenergieversorgung angeschlossen, die bei Ausfall des Stromnetzes den Zwischenkreis mit Energie versorgt. Die Notenergieversorgung umfasst einen elektrischen Energiespeicher, z.B. Akkumulatoren oder Kondensatoren, die über einen Schalter und einen nachgeschalteten Ladewiderstand mit dem Zwischenkreis verbunden ist. Eine Diode ist parallel zu dem Ladewiderstand geschaltet. Ist der Schalter geschlossen, kann aus dem Zwischenkreis ein Ladestrom über den Ladewiderstand in den Energiespeicher fließen. Im Notbetrieb fließt ein Strom vorwiegend über die Diode vom Energiespeicher in den Zwischenkreis.

Nachteilig an dem herkömmlichen Rotorblatt-Stellantrieb ist, dass der Energiespeicher der Notenergieversorgung für eine hohe Spannung, insbesondere für eine hohe Ladespannung, die der Zwischenkreisbetriebsspannung entspricht, ausgelegt sein muss. Elektrische Energiespeicher für hohe Spannungen sind in der Regel aus einer großen Anzahl hintereinander geschalteter Akkumulatoren oder Kondensatoren aufgebaut. Mit der Anzahl der in Serie geschalteten Akkumulatoren/Kondensatoren steigen die Kosten für den Energiespeicher. Gleichzeitig nimmt mit der Anzahl der Elemente die Zuverlässigkeit, die Wartungsfreundlichkeit und die Lebensdauer des Energiespeichers ab.

Einen Verstellantrieb für die Rotorblätter einer Windkraftanlage auf Basis eines Gleichstrommotors ist in der DE 297 22 109 U1 beschrieben. Der Gleichstrommotor wird aus einer Batterie gespeist. Die Batterie wird aus einem Gleichrichter nachgeladen. Der Antrieb einschließlich der Batterie befindet sich im Rotor — üblicherweise in der Rotornabe — der Windkraftanlage.

Übliche Blei-Säure oder Blei-Gel Akkumulatoren sind für die Anordnung in der sich drehenden Rotornabe wenig geeignet, da sie einen hohen Bedarf an Bauraum und ein hohes Gewicht aufweisen. Außerdem sind solche Akkumulatorsysteme in der Regel nicht lageunabhängig betreibbar. Zudem lassen sich Blei-Säure oder Blei-Gel Akkumulatoren nur schwierig zu überwachen, da die Akkumulatorspannung nur einen ungenauen Rückschluss auf den Ladezustand zulässt. Dies beeinträchtigt die Lebensdauer, da solche Akkumulatoren aus Sicherheitsgründen häufiger als eigentlich notwendig geladen werden müssen. Generell unterliegen Blei-Akkumulatoren einem relativ hohen Verschleiß und sind daher wartungsintensiv.

In der DE 100 33 029 B4 ist vorgeschlagen, eine Notstromversorgungseinrichtung für den Blattverstellantrieb einer Windkraftanlage mit Kondensatoren, insbesondere vom Typ "Ultra-Cap", als Energiespeicher zu implementieren.

Elektrische Kondensatoren sind jedoch teuer und speichern eine im Vergleich zu Batterien bzw. Akkumulatoren geringe Menge an elektrischer Energie. Außerdem ist nur ein Teil der gespeicherten Energie für Antriebszwecke nutzbar, da die Spannung mit der entnommenen Strommenge linear abnimmt. Falls mehrere Verstellvorgänge von Rotorblättern im Notbetrieb vorgenommen werden sollen, ohne dass die Möglichkeit eines zwischenzeitlichen Nachladens des Energiespeichers besteht, reicht die in einem Kondensator gespeicherte Energie unter Umständen nicht aus.

Es ist die Aufgabe der vorliegenden Erfindung einen verbesserten, ausfallsicheren, wartungsarmen und kostengünstig herstellbaren Stellantrieb einer Windkraftanlage, insbesondere einen Stellantrieb für ein Rotorblatt, anzugeben. Damit ist auch die Aufgabenstellung gegeben, eine Nötenergieversorgungseinrichtung für einen Stellantrieb einer Windkraftanlage insbesondere hinsichtlich der Zuverlässigkeit, des Wartungsbedarfs und der Anpassung an die Einbauposition zu verbessern.

Diese Aufgabe wird erfindungsgemäß durch einen Stellantrieb mit den Merkmalen des Patentanspruchs 1 gelöst.

Der erfindungsgemäße Stellantrieb mit einem elektrischen Motor und einem Frequenzumrichter besitzt eine Notenergieversorgungseinrichtung, deren Energiespeicher eine Stützspannung zur Verfügung stellt, die weniger als 80% einer Nennbetriebsspannung beträgt, die der Zwischenkreis im Normalbetrieb, also bei Versorgung aus dem netzgespeisten Gleichrichter, führt. Durch eine Diode ist der Energiespeicher im Normalbetrieb des Frequenzumrichters vom Zwischenkreis getrennt und wird durch die höhere Betriebsspannung des Zwischenkreises nicht beschädigt. Im Notbetrieb stabilisiert der Energiespeicher über die Diode die Spannung des Zwischenkreises automatisch auf bzw. — wenn man einen Spannungsabfall an der Diode berücksichtigt — geringfügig unter der Stützspannung des Energiespeichers. Außerdem ist eine Ladevorrichtung für den Energiespeicher vorgesehen, deren Ladespannung geringer als die Nennbetriebsspannung des Zwischenkreises ist.

Die vorliegende Erfindung erfüllt die gerade für Windkraftanlagen sehr hohen Anforderungen an die Zuverlässigkeit und Ausfallsicherheit des Rotorblattverstellantriebs auf eine im.Vergleich zu herkömmlichen Antrieben sehr effiziente und kostengünstige Art und Weise. Die vorliegende Erfindung macht sich die Erkenntnis zunutze, dass ein elektrischer Motor auch unterhalb der üblichen Zwischenkreisbetriebsspannung noch zuverlässig zu betreiben ist. Der Energiespeicher für die Notenergieversorgung ist daher für eine deutlich geringere Spannung als die normale Betriebsspannung des Zwischenkreises ausgelegt. Demzufolge lässt sich der Energiespeicher aus einer geringen Anzahl in Serie geschalteter Elemente, z.B. Akkumulatoren oder Kondensatoren, aufbauen. Schon bei einer Spannung des Energiespeichers unterhalb von 80% der normalen Zwischenkreisspannung ist ein besonders kostengünstiger und wartungsfreundlicher Aufbau der Notenergieversorgungseinrichtung gewährleistet. Eine weitere Vereinfachung und Kosteneinsparung ergibt sich bei Verwendung eines Energiespeichers mit einer Stützspannung von unter 70%, unter 60% oder unter 50% der Nennbetriebsspannung des Zwischenkreises. So wären etwa 15 bis 16 Lithium-Ionen Akkupacks mit einer Nennspannung von 36 Volt erforderlich, um die volle Zwischenkreisspannung von 565 Volt abzusichern. Eine Reduzierung der Notbetriebsspannung auf unter 80% der normalen Zwischenkreisspannung entspricht einer Einsparung von 3 oder 4 Akkupacks pro Stellantrieb. Bei einer Reduzierung auf 50% werden gar 8 Akkupacks eingespart. Die Verringerung der Anzahl der potentiell wartungsbedürftigen Akkumulatoreinheiten reduziert zudem den Wartungaufwand. Bei Verwendung von 12 Volt Blei-Akkumulatoren sind die genannten Stückzahlen zu verdreifachen.

Außerdem besteht eine genügend hohe Differenz zwischen der Spannung des Energiespeichers und der Nennbetriebsspannung des Zwischenkreises, so dass eine Stromentnahme aus dem Energiespeicher aufgrund von belastungsbedingten Spannungseinbrüchen am Zwischenkreis nicht zu befürchten ist. Dadurch lässt sich der Ladezustand des Energiespeichers einfacher und zuverlässiger ermitteln und überwachen. Zudem wird eine hohe Lebensdauer des Energiespeichers erzielt.

Durch eine entsprechende Auslegung des Motors lässt sich ein zuverlässiger Notbetrieb auch bei einer niedrigen Stützspannung gewährleisten. Eine weitere Absicherung des Notbetriebs kann dadurch erfolgen, dass bei der Festlegung der Stützspannung eine statistischen Ausfallswahrscheinlichkeit für die den Energiespeicher bildenden Elemente — z.B. Akkumulatoren — berücksichtigt wird, so dass der Energiespeicher selbst bei einem Ausfall solcher Elemente noch genügend Spannung für einen sicheren Notbetrieb bereitstellt. Die statistische Ausfallwahrscheinlichkeit kann zudem durch bedarfsgerechte Wartung und durch in der Notenergieversorgungseinrichtung integrierte Diagnosefunktiohen stark reduziert werden.

Weiterhin ist gewährleistet, dass der Zwischenkreis von der Ladespannung nicht beeinträchtigt wird. Ein vom Ladegerät bereitgestellter Ladestrom fließt nur in den Energiespeicher und ein Ladevorgang kann völlig unabhängig von dem Betriebszustand des Umrichters erfolgen. Falls die Möglichkeit besteht, dass das Ladegerät auch im Notbetrieb eingeschaltet ist, kann es gegen eine zu hohe Strombelastung abgesichert werden. Vorzugsweise wird eine elektronische Strombegrenzung verwendet, um den Wartungsaufwand zu minimieren.

Gemäß einem weiteren Aspekt der vorliegenden Erfindung ist eine Notenergieversorgungseinrichtung für die Versorgung eines elektrischen Stellantriebs einer Windkraftanlage im Notbetrieb, also bei Ausfall eines Stromnetzes, das den Stellantrieb im Normalbetrieb mit elektrischer Energie versorgt, angegeben.

Die Notenergieversorgungseinrichtung umfasst einen Energiespeicher, der mehrere in Serie geschaltete Akkumulatoreinheiten aufweist, und eine Ladevorrichtung zum Laden der Akkumulatoreinheiten. Die Besonderheit ist die Verwendung von mehreren, insbesondere 8 Lithium-Ionen-Akkumulatoreinheiten (sog. Akkupacks) als Energiespeicher.

Lithium-Ionen-Akkumulatoreinheiten werden auch für andere Einsatzzwecke, z.B. akkubetriebene Werkzeuge, verwendet und sind daher aus einer Großserienfertigung sehr kostengünstig beziehbar. Die vorzugsweise verwendeten Bosch Lithium-Ionen Akkupacks sind zudem technologisch ausgereift, sind strengen Qualitätskontrollen unterworfen und genügen hohen Belastbarkeitsanforderungen.

Die Akkumulatoreinheiten haben jeweils eine Nennspannung von 36V, so dass ein aus 8 Akkumulatoreinheiten gebildeter Energiespeicher eine Nennspannung von 288V bereitstellt. Mit dieser Spannung lässt sich der Elektromotor zuverlässig antreiben. Die Spannung ist vorzugsweise so gewählt, dass eine Mindestbetriebsspannung des versorgten Antriebs auch bei einem niedrigen Ladezustand des Akkumulators noch sicher erreicht wird. Dies ist gewährleistet, wenn die Nennspannung des Energiespeichers die Mindestbetriebsspannung um etwa 20% übersteigt. Die hohe Strombelastbarkeit und Kapazität der Lithium-Ionen-Akkupacks gewährleisten eine ausreichende Motorleistung zum Verstellen der Rotorblätter in die Fahnenstellung.

In der Windkraftanlage sollen die Akkumulatoren für die Notenergieversorgung möglichst nahe an den Rotorblattstellantrieben, also in der Rotornabe, angeordnet sein, um Leitungen einzusparen und um eine fehlerträchtige Stromleitung über einen Schleifring zu vermeiden. In der Rotornabe steht jedoch nur wenig Bauraum zur Verfügung. Zudem dürfen die Akkumulatoren von der Rotation der Rotornabe nicht beeinträchtigt werden. Lithium-Ionen-Akkupacks erfüllen diese für Windkraftanlagen spezifischen Anforderungen optimal, da Lithium-Ionen Akkumulatoren in Bezug auf die gespeicherte Energiemenge leichter und kompakter als andere Akkumulatorsysteme oder aber Kondensatoren sind. So weisen Lithium-Ionen Akkumulatoren nur etwa 1/3 der Größe und des Gewichts von Blei-Gel Akkumulatoren auf. Zudem können Lithium-Ionen Akkumulatoren im Gegensatz zu Blei-Gel Akkumulatoren lageunabhängig betrieben werden.

Außerdem kann der Ladezustand von Lithium-Ionen Akkumulatoren mit einfachen Mitteln präzise überwacht werden. Insbesondere kann der Ladezustand durch eine einfache Spannungsmessung sehr viel genauer als bei z.B. Blei-Akkumulatoren erfasst werden. Somit kann der aus Lithium-Ionen Akkumulatoren gebildete Energiespeicher jederzeit in einem ausreichenden Ladezustand gehalten werden und weist eine hohe Zuverlässigkeit auf. Die Lithium-Ionen Akkumulatoren lassen sich durch die einfache Erfassbarkeit des Ladezustands zuverlässig in Abhängigkeit vom ihrem Ladezustand nachladen. Dadurch verringert sich die Anzahl der in einem bestimmten Zeitraum durchgeführten Ladezyklen gegenüber konventionellen Akkumulator-Energiespeichern, die aus Sicherheitsgründen öfter als eigentlich nötig oder mit einem Erhaltungsladestrom geladen werden. Zudem wird eine bedarfsgerechte Wartung ermöglicht.

Bei Lithium-Ionen-Akkumulatoreinheiten erhöht sich die Zyklenzahl und die kalendarische Lebensdauer der Akkumulatoreinheiten beträchtlich, wenn ein Ladezustand zwischen etwa 40% und etwa 70% der Kapazität der Akkumulatoreinheit nicht unterschritten bzw. nicht überschritten wird. Dies kann durch die einfache und präzise Erfassbarkeit des Ladezustands technisch leicht realisiert werden. Lithium-Ionen Akkumulatoren weisen somit bei einer geeigneter Zustandsüberwachung und Ladestrategie eine hohe Zyklenzahl und eine hohe kalendarische Lebensdauer auf. Der von Lithium-Ionen Akkumulatoren bekannte Effekt einer chemischen Zersetzung kann so auf ein Minimum verringert werden. Der von Nickel-Cadmium Akkumulatoren bekannte Memory Effekt tritt nicht auf.

Die Erfindung beruht somit auch auf der Erkenntnis, das Lithium-Ionen-Akkumulatoreinheiten wegen dem geringen Wartungsbedarf, den günstigen Abmessungen, ihrer Zuverlässigkeit, der präzisen Überwachbarkeit des Zustands und wegen der hohen erzielbaren Lebensdauer eine effiziente, kostengünstige und zuverlässige Notenergieversorgungseinrichtung einer Windkraftanlage ermöglichen, obwohl sie einer langsamen chemischen Zersetzung unterliegen.

Weitere vorteilhafte Ausgestaltungen sind in den Unteransprüchen angegeben.

Eine weitere vorteilhafte Weiterbildung sieht vor, dass die Ladevorrichtung zum Aufladen einer einzelnen Akkumulatoreinheit, ausgebildet ist und dass eine Schaltvorrichtung vorhanden ist, über die das Ladegerät mit jeweils einer der Akkumulatoreinheiten verbindbar ist. Auf diese Weise kann jede Akkumulatoreinheit separat und unabhängig von den anderen Akkumulatoreinheiten geladen werden, und es lässt sich durch Verwendung einer einzigen kostengünstigen Ladevorrichtung ein optimaler Ladezustand der einzelnen Akkumulatoreinheiten erzielen.

Vorzugsweise überprüft eine Steuereinheit jeweils den Ladezustand der einzelnen Akkumulatoreinheiten und steuert in Abhängigkeit vom Prüfergebnis die Schaltvorrichtung an. Auf diese Weise ist eine zuverlässige Zustandsüberwachung und —beeinflussung der Akkumulatoreinheiten gewährleistet. Es wird eine hohe Verfügbarkeit der Notenergieversorgungseinrichtung und somit des Stellantriebs erzielt.

Eine einfache, effiziente und bedarfsgerechte Steuerung des Akkumulatorladezustands wird erzielt, wenn eine Akkumulatoreinheit bei Unterschreiten einer Vorgabespannung mit dem Ladegerät verbunden wird. Durch dieses Ladeverfahren kann die Zahl der Ladezyklen so gering wie möglich gehalten werden. Somit ergibt sich ein energieeffizienter Betrieb der Notenergieversorgungseinrichtung. Gerade für den Betrieb von Windkraftanlagen sind die dadurch erzielte hohe Lebensdauer sowie der verringerte Wartungsbedarf der Akkumulatoreinheiten vorteilhaft.

Vorzugsweise ist jede Akkumulatoreinheit mit einer eigenen Überwachungsschaltung versehen, mit der die Spannung bzw. die Temperatur der Akkumulatoreinheit erfassbar ist. Wenn eine Kommunikationsverbindung zwischen der Überwachungsschaltung und der Steuereinheit herstellbar ist, lässt sich der Zustand der Akkumulatoreinheit auf einfache und effiziente Weise von der Steuereinheit abfragen und bei der Steuerung des Akkumulatorladezustands berücksichtigen. Außerdem kann auf einfache Weise eine Akkudefekterkennung z.B. anhand anormaler Spannungs- und Temperaturwerte durchgeführt werden.

Eine weitere Ausgestaltung sieht vor, den Innenwiderstand einer Akkumulatoreinheit zu bestimmen. Zum Beispiel ist es möglich, bei einem Entladevorgang über einen bekannten Widerstand unter anderem aus der Akkumulatorspannung den Innenwiderstand einer Akkumulatoreinheit zu bestimmen. Der Innenwiderstand erlaubt eine aussagekräftige Einschätzung der Leistungsfähigkeit der Akkumulatoreinheit und somit der Notenergieversorgungseinrichtung.

Ein erhöhter Innenwiderstand ist zudem ein Maß für die Alterung der Akkumulatoreinheit. Vorzugsweise wird daher eine Wartungsanzeige angesteuert, falls der Innenwiderstand höher als ein erster Schwellwert ist. Auf diese Weise ist eine bedarfsgerechte Wartung und somit eine optimale Verfügbarkeit des Stellantriebs sichergestellt.

Wird eine Akkumulatoreinheit überbrückt, falls ihr Innenwiderstand einen zweiten Schwellwert überschreitet, so wird verhindert, dass die Leistung der Notenergieversorgungseinrichtung durch eine hochohmige Akkumulatoreinheit stärker als durch den Wegfall der Akkumulatoreinheit beeinträchtigt wird. Der zweite Schwellwert kann höher angesetzt werden, als der erste Schwellwert, um einen rechtzeitigen Austausch einer gealterten Akkumulatoreinheit zu ermöglichen. Falls der erste und der zweite Schwellwert gleich sind, ergibt sich eine besonders einfache Auslegung der Steuereinheit.

Da der Innenwiderstand temperaturabhängig ist, folgen der erste bzw. der zweite Schwellwert vorzugsweise einer von der Temperatur der Akkumulatoreinheit abhängigen Kennlinie, die insbesondere mit steigender Temperatur abnimmt. Auf diese Weise erlaubt die Wartungsanzeige eine zuverlässige Aussage über die Akkumulatoralterung.

Nachfolgend werden die vorliegende Erfindung und deren Vorteile unter Bezugnahme auf die in den Figuren dargestellten Ausführungsbeispiele näher erläutert.

Es zeigen:

Fig. 1      ein Schaltbild eines Drehstromstellantriebs mit einer Notenergieversorgungseinrichtung,

Fig. 2      ein detailliertes Schaltbild einer Akkumulatoreinheit, welche in der in Fig. 1 dargestellten Schaltung Verwendung findet, und

Fig. 3      eine schematische Schaltskizze einer Datenübertragungsverbindung zwischen mehreren Akkumulatoreinheiten und einem Microcontroller.

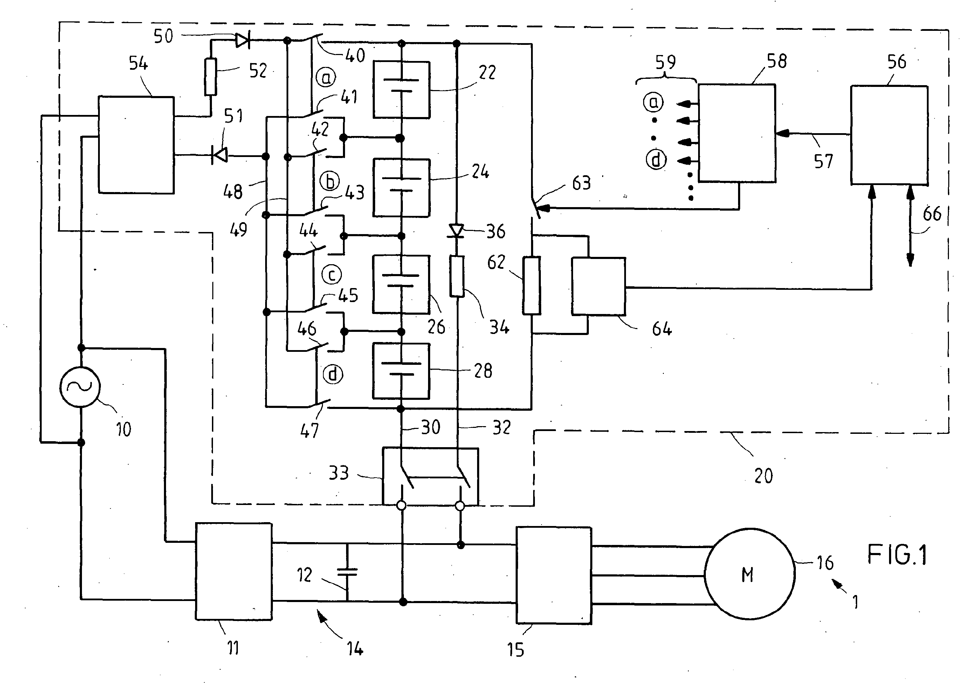

In Figur 1 ist ein vereinfachtes Schaltbild eines Drehstromstellantriebs 1, zum Einsatz als Rotorblattverstellantrieb in einer Windkraftanlage, dargestellt. Ein Wechselstromnetz 10 versorgt einen Gleichrichter 11, der wiederum einen Zwischenkreiskondensator 12 eines Gleichspannungszwischenkreises 14 mit Gleichstrom speist. Aus dem Zwischenkreis 14 entnimmt ein Wechselrichter 15 elektrische Energie, um einen Drehstrommotor 16 anzutreiben. Der Wechselrichter 15 wird von einer nicht dargestellten Steuereinheit angesteuert, um die Drehstromfrequenz, mit der der Motor 16 angetrieben wird, vorzugeben. Der Gleichrichter 11, der Zwischenkreis 14 und der Wechselrichter 15 und die genannte Steuereinheit bilden einen Frequenzumrichter zur Ansteuerung des Motors 16.

Eine Notenergieversorgungseinrichtung 20 ist an den Gleichspannungszwischenkreis 14 angeschlossen. Ein elektrischer Energiespeicher ist aus acht in Reihe geschalteten Akkumulatoreinheiten gebildet. Jede der Akkumulatoreinheiten besitzt eine Nennspannung von 36 Volt. Dementsprechend stellt der Energiespeicher eine Spannung von 288 Volt bereit. In der Figur 1 ist davon abweichend aus Gründen der Übersichtlichkeit eine Schaltung aus nur 4 Akkumulatoreinheiten 22, 24, 26, 28 dargestellt. Diese Schaltung kann jedoch problemlos auf eine größere Anzahl an Akkumulatoreinheiten erweitert werden.

Der Energiespeicher ist über zwei Zuleitungen 30 und 32 an den Zwischenkreis 14 angeschlossen. Die Zuleitungen 30 und 32 sind durch Schalter 33 unterbrechbar. In der Zuleitung 32 ist eine Sicherung 34 zum Schutz des Zwischenkreises 14 und der Akkumulatoreinheiten 22, 24, 26, 28 angeordnet. Außerdem ist eine Diode 36 in die Zuleitung 32 geschaltet. Die Durchlassrichtung der Diode 36 ist so gewählt, dass ein Stromfluss nur dann aus dem Energiespeicher in den Zwischenkreis 14 erfolgen kann, wenn die Zwischenkreisspannung unter die Stützspannung des Energiespeichers — die in Reihe geschalteten Akkumulatoreinheiten 22, 24, 26, 28 - sinkt. Falls die Zwischenkreisspannung über der Spannung des Energiespeichers liegt, verhindert die Diode 36 einen Stromfluss zwischen dem Zwischenkreis 14 und den Akkumulatoreinheiten 22, 24, 26, 28.

Jede der Akkumulatoreinheiten 22, 24, 26, 28 ist auf die dargestellte Weise über zwei Schalter 40, 41, bzw. 42, 43; 44, 45 und 46, 47 mit einem Leitungspaar 48 und 49 verbindbar. Das Leitungspaar 48, 49 ist über die Dioden 50 und 51 sowie über die Sicherung 52 mit einer Ladeschaltung 54 verbunden. Anstelle der Sicherung 52 kann auch eine elektronische Strombegrenzungsschaltung verwendet werden. Die Ladeschaltung 54 ist ihrerseits an das Stromnetz 10 angeschlossen. Die Durchlassrichtung der Dioden 50 und 51 ist so gewählt, dass sich die Akkumulatoreinheiten 22, 24, 26, 28 über die Ladeschaltung 54 nicht entladen können.

Die Ansteuerung der Schalter 40, 41, 42, 43, 44, 45, 46 und 47 erfolgt durch einen Microcontroller 56. Der Microcontroller 56 ist mit einer Treiberschaltung 58 verbunden, welche die Ansteuersignale 57 des Microcontrollers 56 verstärkt und als Schaltsignale 59 ausgibt. Die Schaltsignale 59 sind an die Schalter 40, 41, 42, 43, 44, 45, 46 und 47 geführt. Wie aus der Figur 1 zu erkennen ist, werden die Schalter jeweils in Paaren 40, 41; 42, 43; 44, 45 und 46, 47 gemeinsam angesteuert. Die aus Gründen der Übersichtlichkeit nicht eingezeichneten Schaltsignalverbindungen sind durch die Kleinbuchstaben a, b, c und d gekennzeichnet.

Als Microcontroller 56 kann beispielsweise ein 8bit Microcontroller des Typs "Microchip PIC16F877" eingesetzt werden. Um die erforderliche Anzahl an Schaltsignalen 59 zu generieren, wird ein Demultiplexer (nicht dargestellt) zwischen ein paralleles Dateninterface des Microcontrollers 56 und die Treiberschaltung 58 geschaltet. Der Demultiplexer erzeugt aus einem Datenwert binäre Schaltsignale, die in der Treiberschaltung 58 verstärkt werden.

Des Weiteren ist ein Widerstand 62 vorhanden, der über einen Schalter 63 mit den in Reihe geschalteten Akkumulatoreinheiten 22, 24, 26, 28 verbunden werden kann. Der Schalter 63 ist über die Treiberschaltung 58 von dem Microcontroller 56 ansteuerbar. Parallel zu dem Widerstand 62 ist ein Spannungsmessgerät 64 angeordnet, das die am Widerstand 62 abfallende Spannung erfasst. Eine Datenleitung zum Übermitteln erfasster Spannungswerte verbindet das Spannungsmessgerät 64 mit dem Microcontroller 56.

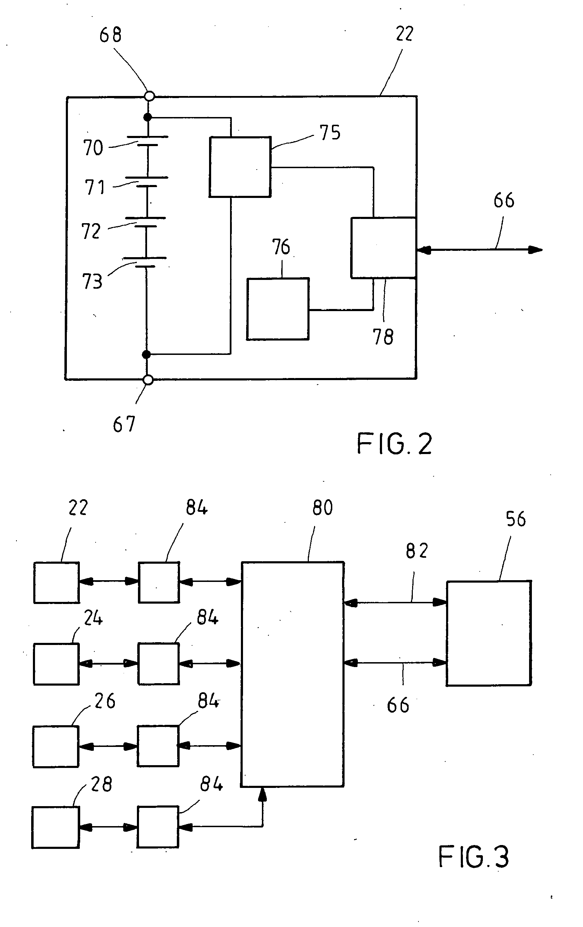

Zwischen dem Microcontroller 56 und den Akkumulatoreinheiten 22, 24, 26, 28 besteht eine weitere Datenleitung 66 über die der Microcontroller 56 die Klemmenspannung und die Temperatur der Akkumulatoreinheiten abfragen kann. Der Aufbau einer der Akkumulatoreinheiten 22 ist in der Figur 2 detaillierter dargestellt. Prinzipiell sind die Akkumulatoreinheiten 22, 24, 26, 28 gleichartig aufgebaut.

Wie in Figur 2 zu erkennen ist, sind zwischen den Anschlussklemmen 67, 68 der Akkumulatoreinheit 22 eine bestimmte Anzahl von Akkumulatorzellen 70, 71, 72, 73 in Reihe angeordnet. In der Figur 2 sind nur 4 Zellen dargestellt. Die tatsächliche Anzahl der in Reihe geschalteten Zellen ergibt sich unmittelbar aus der geforderten Nennspannung der Akkumulatoreinheit 22. Um eine höhere Kapazität zu erzielen, können darüber hinaus auch Akkumulatorzellen in Parallelschaltung zu den dargestellten Akkumulatorzellen 70, 71, 72, 73 angeordnet sein. Die im Ausführungsbeispiel verwendeten Akkumulatoreinheiten umfassen jeweils zwanzig Lithium-Ionen Akkumulatorzellen, wovon jeweils zehn Akkumulatorzellen in Reihe geschaltet sind. Daraus ergibt sich eine jeweilige Nennspannung der Akkumulatoreinheiten von 36 Volt.

Eine an der Akkumulatoreinheit 22 angeordnete Spannungsmesseinrichtung 75 erfasst die Klemmenspannung. Außerdem ist ein Temperatursensor 76 vorhanden, der die Temperatur im Innern der Akkumulatoreinheit 22 erfasst. Der Temperatursensor 76 und die Spannungsmesseinrichtung 75 sind über eine Kommunikationsschnittstelle 78 an die Datenleitung 66 angebunden.

Vorzugsweise werden Akkumulatoreinheiten mit 3 Anschlusskontakten verwendet, den Anschlussklemmen 67, 68 und einem weiteren Kontakt für die Datenübertragung. Das Datensignal liegt zwischen dem Datenkontakt und der Anschlussklemme 67, die den Minuspol der Akkumulatoreinheit 22 bildet, vor. Da die Akkumulatoreinheiten 22, 24, 26, 28 hinsichtlich der Spannung in Serie geschaltet sind, können die negativen Anschlussklemmen 67 nicht zusammengeschaltet werden, um einen gemeinsamen Datenbus zwischen dem Microcontroller 56 und den Akkumulatoreinheiten 22, 24, 26, 28 zu bilden. Wie in Figur 3 dargestellt, ist stattdessen ein Multiplexer 80 in der Datenleitung 66 zwischen den Microcontroller 56 und die Akkumulatoreinheiten 22, 24, 26, 28 geschaltet. Der Multiplexer wird vom Microcontroller 56 durch ein Steuersignal 82 angesteuert und schaltet eine Datenverbindung zwischen dem Microcontroller 56 und einer vom Microcontroller 56 vorgegebenen Akkumulatoreinheit. Zwischen den Akkumulatoreinheiten 22, 24, 26, 28 und dem Multiplexer 80 sind Optokoppler 84 geschaltet, um das Spannungsniveau der jeweiligen Akkumulatoreinheit vom Spannungsniveau des Microcontrollers 56 zu entkoppeln.

Im Folgenden wird die Funktionsweise des Drehstromverstellantriebs 1 beschrieben. Im Normalbetrieb, bei Versorgung aus dem Stromnetz 10, lädt der Gleichrichter 11 den Zwischenkreiskondensator 12 auf eine Nennbetriebsspannung auf. Die Nennbetriebsspannung des Zwischenkreises entspricht der Scheitelspannung des Stromnetzes bei normaler, störungsfreier Netzversorgung. Im europäischen Dreiphasen-Drehstromnetz beträgt diese Scheitelspannung etwa 565 Volt. Der Wechselrichter 15 wandelt die Zwischenkreisgleichspannung in einen Drehstrom zur Ansteuerung des Motors 16 um. Da die Funktionsweise eines solchen Frequenzumrichters dem Fachmann hinlänglich bekannt ist, wird an dieser Stelle auf eine detaillierte Beschreibung verzichtet.

Der Microcontroller 56 überwacht die Akkumulatoreinheiten 22, 24, 26, 28. Dazu fragt der Microcontroller 56 in regelmäßigen Abständen die Spannungswerte und Temperaturwerte der in bzw. an den Akkumulatoreinheiten angeordneten Spannungsmesseinrichtungen 75 und Temperatursensoren 76 über die Datenleitung 66 ab. Überschreitet die Temperatur einer Akkumulatoreinheit einen zulässigen Höchstwert, so steuert der Microcontroller 56 eine Warnanzeige an.

Vorzugsweise oder alternativ veranlasst der Microcontroller 56 ebenfalls eine Warnnachricht an einen Leitstand (nicht dargestellt) der Windkraftanlage. Dazu ist der Microcontroller 56 über eine Datenleitung mit dem Leitstand verbunden.

Sinkt die Spannung einer Akkumulatoreinheit unter eine untere Vorgabespannung ab, so veranlasst der Microcontroller 56 ein Nachladen dieser Akkumulatoreinheit. Dazu schaltet der Microcontroller 56 mittels der Schalter 40, 41, bzw. 42, 43; 44, 45 oder 46, 47 eine Verbindung zwischen dieser Akkumulatoreinheit und der Ladeschaltung 54. Die Ladeschaltung 54 ist zum Laden einer einzelnen Akkumulatoreinheit ausgelegt. Die Ladeschluss-Spannung, die die Ladeschaltung maximal bereitstellt, beträgt 40 Volt. Der Microcontroller 56 überwacht die Spannung der Akkumulatoreinheit während des Ladens und beendet den Ladevorgang sobald eine bestimmte obere Vorgabespannung erreicht ist. Die obere Vorgabespannung kann der Ladeschluss-Spannung entsprechen. Um den Ladevorgang zu beenden, wird die geladene Akkumulatoreinheit von der Ladeschaltung 54 getrennt.

Bei den verwendeten Lithium-Ionen-Akkumulatoreinheiten erhöht sich die Zyklenzahl und die kalendarische Lebensdauer der Akkumulatoreinheiten beträchtlich, wenn ein Ladezustand zwischen etwa 40% und etwa 70% der Kapazität der Akkumulatoreinheit nicht unterschritten bzw. nicht überschritten wird. Die untere Vorgabespannung ist daher höher als die Entladeschluss-Spannung und die obere Vorgabespannung ist geringer als die Ladeschluss-Spannung eingestellt, um den genannten Ladezustandsbereich einzuhalten.

Des Weiteren bestimmt der Microcontroller 56 in regelmäßigen Abständen den Innenwiderstand jeder Akkumulatoreinheit 22, 24, 26, 28, um eine Alterung der Akkumulatoreinheiten zu überwachen. Dazu steuert der Microcontroller den Schalter 63 für eine vorbestimmte Zeitdauer an, so dass ein Strom aus den Akkumulatoreinheiten 22, 24, 26, 28 über den Widerstand 62 fließt. Der dabei auftretende Spannungsabfall am Widerstand 62 wird durch das Spannungsmessgerät 64 erfasst. Aus diesem Spannungsabfall lässt sich die Entladestromstärke bestimmen. Während der Schalter 63 geschlossen ist, wird zudem die Spannung jeder Akkumulatoreinheit erfasst. Für die Berechnung des Innenwiderstands Ri einer Akkumulatoreinheit nach der bekannten Rechenvorschrift

$$Ri = - (U2-U1) / (I2-I1)$$

ist die Erfassung eines weiteren Spannung/Strom-Wertepaares nötig. Zweckmäßigerweise verwendet man dazu die Spannung der unbelasteten Akkumulatoreinheit und den zugehörigen Stromwert I = 0.

Der Microcontroller 56 besitzt ein Programm, um die Spannungswerte der Akkumulatoreinheiten im unbelasteten Zustand und im belasteten Zustand sowie den zugehörigen Entladestrom zu erfassen und um aus diesen Daten den Innenwiderstand jeder Akkumulatoreinheit zu berechnen. Auf der Grundlage der Innenwiderstandberechnung kann der Microcontroller ein Maß für die Alterung der Akkumulatoreinheit bestimmen, da sich der Innenwiderstand einer Akkumulatoreinheit mit zunehmendem Alter und mit der Zahl der Entlade-/Ladezyklen kontinuierlich erhöht. Der Innenwiderstand ist allerdings stark temperaturabhängig. Um eine zuverlässige Aussage über die Alterung einer Akkumulatoreinheit zu treffen, erfasst der Microcontroller 56 auch die Temperatur der Akkumulatoreinheit bei den Strom-/Spannungsmessungen zur Bestimmung des Innenwiderstands, z.B. während der Schalter 63 geschlossen ist. Der Innenwiderstand wird anhand der gemessenen Temperatur bewertet.

Eine einfache Wartungsanzeige zum Austausch einer aufgrund ihrer Alterung und ihres erhöhten Innenwiderstandes nicht mehr ausreichend leistungsfähigen Akkumulatoreinheit lässt sich realisieren, indem der Innenwiderstand mit einem Schwellwert verglichen wird. Eine Berücksichtigung der Akkumulatortemperatur wird durch einen Schwellwert erzielt, der mit steigender Temperatur aufgrund einer festgelegten Kennlinie sinkt. Überschreitet der Innenwiderstand den Schwellwert, löst der Microcontroller 56 eine Wartungsanzeige aus oder meldet eine Wartungsnachricht an einen zentralen Leitstand.

Des Weiteren ist es vorteilhaft, eine Schaltungsanordnung (nicht dargestellt) vorzusehen, mit der jede der Akkumulatoreinheiten überbrückt werden kann. Diese Überbrückungsschaltung ist ebenfalls vom Microcontroller 56 ansteuerbar. Überschreitet der Innenwiderstand einer Akkumulatoreinheit einen weiteren Schwellwert oberhalb des Schwellwerts für die Wartungsanzeige, so wird durch Ansteuern der Überbrückungsschaltung ein Strompfad parallel zu dieser Akkumulatoreinheit aktiviert. So kann verhindert werden, dass eine hochohmige Akkumulatoreinheit den Stützstrom aus den Akkumulatoreinheiten unzulässig begrenzt. Im später beschriebenen Notbetrieb wird dadurch ein zuverlässiges Abstützen der Zwischenspannung, wenn auch auf einem um die Spannung der überbrückten Akkumulatoreinheit niedrigeren Spannungsniveau, erzielt. Außerdem wird eine starke Erwärmung der hochohmigen Akkumulatoreinheit und eine Beschädigung der Notenergieversorgungseinrichtung 20 verhindert.

Die Akkumulatoreinheiten 22, 24, 26, 28 werden im vorgeladenen Zustand geliefert. Somit stellt der Energiespeicher schon bei Auslieferung eine hohe Spannung bereit. Die Schalter 33 besitzen die Funktion einer Transportsicherung der Notenergieversorgungseinrichtung 20 und sind zu Transport-, Wartungs- und Montagezwecken geöffnet. Nach der Montage des Stellantriebs 1 werden die Schalter 33 geschlossen.

Ein Notbetrieb setzt ein, wenn das Stromnetz 10 aufgrund einer Störung ausfällt oder dessen Spannung stark einbricht. Sobald die Spannung des Zwischenkreises unter die Spannung der in Reihe geschalteten Akkumulatoreinheiten fällt, fließt automatisch ein Stützstrom von den Akkumulatoreinheiten über die Diode 36 in den Zwischenkreis und stützt die Zwischenkreisspannung ab. Die abgestützte Zwischenkreisspannung ist lediglich um den Spannungsabfall an der Diode geringer als die Spannung der Akkumulator-Reihenschaltung. Die den Akkumulatoreinheiten 22, 24, 26, 28 entnehmbare Leistung beträgt ein Mehrfaches der Leistung, die für ein Fahren eines Rotorblatts in die Fahnenstellung benötigt wird. Somit ist auch bei einem Ausfall des Stromnetzes 10 ein sicherer Notbetrieb einschließlich eines sicheren Stillsetzens der Windkraftanlage gewährleistet.

Um bei einem Netzfehler von kurzer Dauer ein Stillsetzen zu vermeiden, kann alternativ der Betrieb der Windkraftanlage mit der Notversorgung aus den Akkumulatoreinheiten eine bestimmte Zeitlang aufrecht erhalten werden. Dauert der Netzfehler an, so wird nach einer bestimmten Zeitdauer, jedoch bevor die Akkumulatoren erschöpft sind, die Anlage mit Hilfe der Rotorblattstellantriebe stillgesetzt. Diese Zeitdauer ist von der Kapazität und dem Ladezustand der Akkumulatoren abhängig. Bei einem solchen Notbetriebskonzept wird der Akkumulatorladezustand vorzugsweise auch während dem Notbetrieb erfasst, um die Anlage rechtzeitig stillsetzen zu können.

Selbstverständlich ist auch für die zur Ansteuerung des Stellantriebs, insbesondere zur Ansteuerung des Wechselrichters, benötigten Steuerungskomponenten eine unterbrechungsfreie Stromversorgung (nicht dargestellt) vorgesehen, so dass bei Ausfall des Stromnetzes 10 die Steuerbarkeit der Rotorblätter gewährleistet ist.

Das Stromnetz 10 kann ein öffentliches Stromnetz darstellen. Das Stromnetz 10 kann ebenso ein internes Stromnetz der Windkraftanlage sein, das aus dem Generator der Windkraftanlage gespeist wird und bei Windstillstand aus einem öffentlichen Netz.

Die Ladeschaltung 54 kann statt an das Wechselstromnetz 10 an den Zwischenkreis 14 angeschlossen sein und einen Gleichstromumsetzer zur Erzeugung einer im Vergleich zur Zwischenkreisnennbetriebsspannung geringeren Ladespannung aufweisen.

Die in der Figur 1 dargestellten Schalter 41, 42 ... 47, können als elektromechanische Schaltelemente, insbesondere als Relais, oder als elektrische Halbleiterschalter ausgeführt sein. Bei der Verwendung von Relais ergibt sich ein besonders kostengünstiger Aufbau der Notenergieversorgungseinrichtung 20 und eine sichere galvanische Trennung zwischen der Ladeschaltung 54 und denjenigen Akkumulatoreinheiten 22, 24, 26, 28 die gerade nicht geladen werden.

Die in Figur 1 dargestellte Schaltung kann leicht auf eine beliebige Zahl Akkumulatoreinheiten angepasst werden. Dazu wird die gewünschte Anzahl der Akkumulatoreinheiten in Reihe geschaltet und für jede Akkumulatoreinheit ein Schalterpaar zum Anschluss an die zur Ladeschaltung führenden Leitungen 48 und 49 vorgesehen. Des Weiteren wird die Anzahl der Schaltsignale, die der Microcontroller 56 bzw. die Treiberschaltung 58 erzeugen kann, entsprechend angepasst. Das Steuerprogramm des Microcontrollers 56 ist so auszulegen, dass alle Akkumulatoreinheiten bei der beschriebenen Zustandsüberwachung und bei den Ladevorgängen berücksichtigt werden.

Die eingangs genannten acht in Reihe geschalteten Lithium-Ionen Akkumulatoreinheiten stellen eine Stützspannung von 288 Volt zur Verfügung. Somit entspricht die Stützspannung etwa 50% der Nennbetriebsspannung des Zwischenkreises. Eine weitere Reduzierung der Stützspannung und somit der Zahl der Akkumulatoreinheiten ist möglich, solange eine sichere Betätigung des Elektromotors gewährleistet ist. Das Drehmoment und die Leistung des Drehstrommotors 16 verringert sich mit Verringerung der Motorspeisespannung. Damit ergibt sich abhängig von der Last eine geringere Drehzahl und eine längere Verstelldauer für das Rotorblatt.

Der Einfluss der verringerten Spannung kann teilweise dadurch ausgeglichen werden, dass ein leistungsfähigerer, für den Normalbetrieb eigentlich überdimensionierter Motor eingesetzt wird. Ein solcher Motor stellt auch beim Betrieb mit verringerter Spannung noch genügend Leistung bzw. Drehmoment bereit. Eine intelligente Ansteuerung des Wechselrichters 15 sorgt für einen verlustarmen Teillastbetrieb des Motors im Normalbetrieb. Daher ist es zweckmäßig, die Motorleistung so auszulegen, dass auch mit der Notbetriebsspannung eine sichere Betätigung gewährleistet ist. Bei der Auslegung des Motors sollte eine zusätzliche Spannungserniedrigung durch gegebenenfalls ein oder zwei gebrückte Akkumulatoreinheiten berücksichtigt werden, um eine zusätzliche Erhöhung der Betriebssicherheit zu erreichen.

Abhängig von den verwendeten Akkumulatoren und den Motorbetriebsdaten können sich kostengünstige, vorteilhafte Realisierungen der Notenergieversorgungseinrichtung 20 ergeben, die für eine Stützspannung von unter 60% oder unter 70% der Zwischenkreisnennbetriebsspannung ausgelegt sind. So ist es gegebenenfalls vorteilhaft, statt einer Stützspannung von 50% der Zwischenkreisnennbetriebsspannung eine Stützspannung von 60% oder 70% der Nennbetriebsspannung vorzusehen, wenn dadurch ein kostengünstigerer und kleinvolumigerer Motor verwendet werden kann.

Schon wenn die Stützspannung unterhalb 80% der Nennbetriebsspannung des Zwischenkreises liegt, ergibt sich ein wesentlich kostengünstigerer und vereinfachter Aufbau der Notenergieversorgungseinrichtung 20 im Vergleich zu einem Notenergieversorgungsspeicher, der die Zwischenkreisspannung auf dem Niveau der Nennbetriebsspannung abstützt. Zudem ist eine einfache und automatische Zuschaltung der Notenergie nur in Fällen eines tatsächlichen Netzausfalls gewährleistet. Ein kurzer, geringer Einbruch der Zwischenkreisspannung oberhalb der Stützspannung, z.B. durch erhöhte Motorlast, führt noch nicht zur Energieentnahme aus den Akkumulatoren. Daher kann deren Ladezustand jederzeit zuverlässig angegeben werden.

Die geringe Anzahl der in Reihe geschalteten Akkumulatoren, das Laden einzelner der in Serie geschalteten Akkumulatoreinheiten, die Überwachung des Ladezustandes und die Überwachung der Alterung erlauben eine hohe Lebensdauer und eine bedarfsgerechte Wartung der Notenergieversorgungseinrichtung 20. Dadurch sind eine hohe Zuverlässigkeit und Verfügbarkeit des Stellantriebs 1 sichergestellt. Die Verwendung der Frequenzumrichtertechnik erlaubt den Einsatz eines praktisch verschleißfreien Drehstrommotors 16.

Die in Figur 1 dargestellte Notenergieversorgungseinrichtung 20 ist natürlich auch als Notenergieversorgungseinrichtung eines Gleichstrom-Blattstellantriebs (Gleichstrom-Pitchantrieb) einer Windkraftanlage einsetzbar. Bei einem solchen System wird die Notenergieversorgungseinrichtung 20 im Notbetriebsfall über einen Schalter mit dem Antriebsmotor elektrisch verbunden und stellt die Energie für eine Notfahrt in eine sichere Blattstellung bereit. Auch der Einsatz als Notenergieversorgungseinrichtung für einen Gondeldrehantrieb ist denkbar. Damit lässt sich die Gondel im Notbetriebsfall aus dem Wind drehen.

Bezugszeichenliste

| | |
|---|---|
| 1 | Stellantrieb |
| 10 | Wechselstromnetz |
| 11 | Gleichrichter |
| 12 | Zwischenkreiskondensator |
| 14 | Zwischenkreis |
| 15 | Wechselrichter |
| 16 | Drehstrommotor |
| 20 | Notenergieversorgungseinrichtung |
| 22 | Akkumulatoreinheit |
| 24 | Akkumulatoreinheit |
| 26 | Akkumulatoreinheit |
| 28 | Akkumulatoreinheit |
| 30 | Zuleitung |
| 32 | Zuleitung |
| 33 | Schalter |
| 34 | Sicherung |
| 36 | Diode |
| 40 | Schalter |
| 41 | Schalter |
| 42 | Schalter |
| 43 | Schalter |
| 44 | Schalter |
| 45 | Schalter |
| 46 | Schalter |
| 47 | Schalter |
| 48 | Leitung |
| 49 | Leitung |
| 50 | Diode |
| 51 | Diode |
| 52 | Sicherung |
| 54 | Ladeschaltung |
| 56 | Microcontroller |
| | |
| 57 | Ansteuersignal |
| 58 | Treiberschaltung |
| 59 | Schaltsignale |
| 62 | Widerstand |
| 63 | Schalter |
| 64 | Spannungsmessgerät |
| 66 | Datenleitung |
| 67 | Anschlussklemme |
| 68 | Anschlussklemme |
| 70 | Akkumulatorzelle |
| 71 | Akkumulatorzelle |
| 72 | Akkumulatorzelle |
| 73 | Akkumulatorzelle |
| 75 | Spannungsmesseinrichtung |
| 76 | Temperatursensor |
| 78 | Kommunikationsschnittstelle |
| 80 | Multiplexer |
| 82 | Steuersignal |
| 84 | Optokoppler |

**Patentansprüche**

1. Stellantrieb für ein Rotorblatt einer Windkraftanlage mit einem elektrischen Motor (16) und mit einem Frequenzumrichter, der einen aus einem Stromnetz (10) zu speisenden Gleichrichter (11), einen an den Gleichrichter (11) angeschlossenen Zwischenkreis (14), und einen Wechselrichter (15) zum Speisen des Motors (16) aufweist, wobei der Zwischenkreis (14) in einem netzgespeisten Normalbetrieb des Frequenzumrichters eine vorgegebene Nennbetriebsspannung führt, mit einer an den Zwischenkreis (14) angeschlossenen Notenergieversorgungseinrichtung (20), die einen eine elektrische Stützspannung bereitstellenden Energiespeicher (22, 24, 26, 28) umfasst, und mit einer zwischen den Energiespeicher (22, 24, 26, 28) und den Zwischenkreis (14) geschalteten Diode (36), die hinsichtlich ihrer Durchlassrichtung so angeordnet ist, dass sie einen Stützstrom aus dem Energiespeicher (22, 24, 26, 28) in den Zwischenkreis (14) speist, falls die Zwischenkreisspannung unter die Stützspannung fällt,
**dadurch gekennzeichnet, dass**
die Diode (36) einen Stromfluss zwischen dem Energiespeicher (22, 24, 26, 28) und dem Zwischenkreis (14) praktisch verhindert, wenn die Zwischenkreisspannung größer als die Stützspannung ist, dass die Stützspannung weniger als 80% der Nennbetriebsspannung des Zwischenkreises (14) beträgt, und dass eine Ladevorrichtung (54) für den Energiespeicher (22, 24, 26, 28) vorgesehen ist, deren Ladespannung geringer als die Nennbetriebsspannung des Zwischenkreises (14) ist.

2. Stellantrieb nach Anspruch 1, **dadurch gekennzeichnet, dass** der Energiespeicher eine Serienschaltung von Akkumulatoreinheiten (22, 24, 26, 28) umfasst.

3. Stellantrieb nach Anspruch 2, **dadurch gekennzeichnet, dass** der Energiespeicher eine Serienschaltung von mehreren, insbesondere 8 Lithium-Ionen-Akkumulatoreinheiten aufweist.

4. Stellantrieb nach Anspruch 2 oder 3, **dadurch gekennzeichnet, dass** die Ladevorrichtung (54) zum Aufladen einer einzelnen Akkumulatoreinheit ausgebildet ist und dass eine Schaltvorrichtung (40, 41, 42, 43, 44, 45, 46, 47) vorgesehen ist, mit der eine einzelne der Akkumulatoreinheiten mit der Ladevorrichtung (54) verbindbar ist.

5. Stellantrieb nach Anspruch 4, **dadurch gekennzeichnet, dass** eine Steuervorrichtung (56) vorgesehen ist, mit der jeweils ein Ladezustand einer einzelnen der Akkumulatoreinheiten überprüfbar ist und mit der in Abhängigkeit von dem Prüfergebnis die Schaltvorrichtung (40, 41, 42, 43, 44, 45, 46, 47) steuerbar ist.

6. Stellantrieb nach Anspruch 5, **dadurch gekennzeichnet, dass** die Steuervorrichtung (56) die Schaltvorrichtung (40, 41, 42, 43, 44, 45, 46, 47) so steuert, dass eine Akkumulatoreinheit, deren Spannung niedriger als ein Vorgabespannungswert ist, mit der Ladevorrichtung (54) verbunden wird.

7. Stellantrieb nach wenigstens einem der Ansprüche 2 bis 6, **dadurch gekennzeichnet, dass** jede Akkumulatoreinheit (22) eine Überwachungsschaltung (75, 76) aufweist, mit der die Spannung und/oder die Temperatur der Akkumulatoreinheit (22) erfassbar ist.

8. Stellantrieb nach den Ansprüchen 5 und 7 oder den Ansprüchen 6 und 7, **dadurch gekennzeichnet, dass** zwischen der Steuervorrichtung (56) und einer Überwachungsschaltung (75, 76) eine Kommunikationsverbindung (66) herstellbar ist.

9. Stellantrieb nach einem der vorhergehenden Ansprüche, **dadurch gekennzeichnet, dass** eine Vorrichtung (62, 63, 64) zum Bestimmen eines Innenwiderstands einer Akkumulatoreinheit vorgesehen ist.

10. Stellantrieb nach Anspruch 9, **dadurch gekennzeichnet, dass** die Steuereinheit (56) eine Wartungsanzeige ansteuert, falls der Innenwiderstand einer der Akkumulatoreinheiten größer als ein erster Schwellwert ist.

11. Stellantrieb nach Anspruch 9 oder 10, **dadurch gekennzeichnet, dass** eine Überbrückungsvorrichtung vorgesehen ist, die eine Akkumulatoreinheit überbrückt, falls der Innenwiderstand der Akkumulatoreinheit größer als ein zweiter Schwellwert ist.

12. Stellantrieb nach Anspruch 10 oder 11, **dadurch gekennzeichnet, dass** der erste Schwellwert und/ oder der zweite Schwellwert einer von der Temperatur der Akkumulatoreinheit abhängigen Kennlinie folgen.

13. Notenergieversorgungseinrichtung für die Versorgung eines elektrischen Stellantriebs einer Windkraftanlage im Notbetrieb bei Ausfall eines Stromnetzes (10), das den Stellantrieb im Normalbetrieb mit elektrischer Energie versorgt, mit einem Energiespeicher, der mehrere in Serie geschaltete Akkumulatoreinheiten umfasst, und mit einer Ladevorrichtung (54) zum Laden der Akkumulatoreinheiten, **dadurch gekennzeichnet, dass** der Energiespeicher eine Serienschaltung von mehreren, insbesondere 8 Lithium-Ionen-Akkumulatoreinheiten (22, 24, 26, 28) aufweist.

14. Notenergieversorgungseinrichtung nach Anspruch 13, **dadurch gekennzeichnet, dass** die Ladevorrichtung (54) zum Aufladen einer einzelnen Akkumulatoreinheit ausgebildet ist und dass eine Schaltvorrichtung (40, 41, 42, 43, 44, 45, 46, 47) vorgesehen ist, mit der eine einzelne der Akkumulatoreinheiten mit der Ladevorrichtung (54) verbindbar ist.

15. Notenergieversorgungseinrichtung nach Anspruch 14, **dadurch gekennzeichnet, dass** eine Steuervorrichtung (56) vorgesehen ist, mit der jeweils ein Ladezustand einer einzelnen der Akkumulatoreinheiten überprüfbar ist und mit der in Abhängigkeit von dem Prüfergebnis die Schaltvorrichtung (40, 41, 42, 43, 44, 45, 46, 47) steuerbar ist.

16. Notenergieversorgungseinrichtung nach Anspruch 15, **dadurch gekennzeichnet, dass** die Steuervorrichtung (56) die Schaltvorrichtung (40, 41, 42, 43, 44, 45, 46, 47) so steuert, dass eine Akkumulatoreinheit, deren Spannung niedriger als ein Vorgabespannungswert ist, mit der Ladevorrichtung (54) verbunden wird.

17. Notenergieversorgungseinrichtung nach wenigstens einem der Ansprüche 13 bis 16, **dadurch gekennzeichnet, dass** jede Akkumulatoreinheit (22) eine Überwachungsschaltung (75, 76) aufweist, mit der die Spannung und/oder die Temperatur der Akkumulatoreinheit (22) erfassbar ist.

18. Notenergieversorgungseinrichtung nach den Ansprüchen 15 und 17 oder den Ansprüchen 16 und 17, **dadurch gekennzeichnet, dass** zwischen der Steuervorrichtung (56) und einer Überwachungsschaltung (75, 76) eine Kommunikationsverbindung (66) herstellbar ist.

19. Notenergieversorgungseinrichtung nach wenigstens einem der Ansprüche 13 bis 18, **dadurch gekennzeichnet, dass** eine Vorrichtung (62, 63, 64) zum Bestimmen eines Innenwiderstands einer Akkumulatoreinheit vorgesehen ist.

20. Notenergieversorgungseinrichtung nach Anspruch 19, **dadurch gekennzeichnet, dass** die Steuereinheit (56) eine Wartungsanzeige ansteuert, falls der Innenwiderstand einer der Akkumulatoreinheiten größer als ein erster Schwellwert ist.

21. Notenergieversorgungseinrichtung nach Anspruch 19 oder 20, **dadurch gekennzeichnet, dass** eine Überbrückungsvorrichtung vorgesehen ist, die eine Akkumulatoreinheit überbrückt, falls der Innenwiderstand der Akkumulatoreinheit größer als ein zweiter Schwellwert ist.

**22.** Notenergieversorgungseinrichtung nach Anspruch 20 oder 21, **dadurch gekennzeichnet, dass** der erste Schwellwert und/oder der zweite Schwellwert einer von der Temperatur der Akkumulatoreinheit abhängigen Kennlinie folgen.

**23.** Notenergieversorgungseinrichtung nach wenigstens einem der Ansprüche 13 bis 22, **dadurch gekennzeichnet, dass** der Energiespeicher hinsichtlich seiner Abmessungen und hinsichtlich seines Wartungsbedarfs für eine Anordnung in einer Gondel der Windkraftanlage oder in einer rotierenden Nabe eines Rotors der Windkraftanlage ausgebildet ist.

FIG.1

EP 1 739 807 A2

12

FIG. 2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10335575 A1
- DE 29722109 U1
- DE 10033029 B4